# EUROPÄISCHE PATENTSCHRIFT

(11) **EP 0 477 494 B1**
(45) Veröffentlichungstag und Bekanntmachung des Hinweises auf die Patenterteilung: **14.12.1994**
(21) Anmeldenummer: 91112302.4
(22) Anmeldetag: 23.07.1991
(51) Int. Cl.: B23Q 7/00, B27D 5/00

(54) **Maschine zum Anbringen und Bündigfräsen von Kantenstreifen**
Machine for attaching and flush milling of edge strips
Machine pour attacher et affleurer des bandes de bords

(30) Priorität: 24.09.1990 DE 4030138
(43) Veröffentlichungstag der Anmeldung: 01.04.1992
(73) Patentinhaber: IMA-Norte Maschinenfabriken Klessmann GmbH & Co., D-33334 Gütersloh (DE)
(72) Erfinder: Riesmeier, Wilhelm, W-4990 Lübbecke 1 (DE)
(74) Vertreter: Elbertzhagen, Otto

(56) Entgegenhaltungen:
- EP-A- 0 162 453
- FR-A- 1 467 986
- FR-A- 2 084 411
- FR-A- 2 376 729

## Beschreibung

Die Erfindung bezieht sich auf eine Maschine zum Anbringen und Bündigfräsen von Kantenstreifen an den Schmalflächen plattenförmiger Werkstücke im Durchlauf mit einer Transportvorrichtung, auf der die Werkstücke mit der betreffenden Schmalseite quer zur Durchlaufrichtung überstehend festspannbar sind, und mit in Durchlaufrichtung hintereinander seitlich an der Transportvorrichtung angeordneter Kantenanleimvorrichtung und Bündigfräsvorrichtung, die zumindest ein mit seiner Rotationsachse quer zur Durchlaufrichtung sowie parallel zur Werkstückebene und zumindest mit der Oberseite des Werkstücks bündig nachgeführtes Fräswerkzeug hat.

Bei bekannten Maschinen dieser Art wird das Bündigfräsen der Kantenstreifen an den Schmalflächen der Werkstücke an zwei hintereinanderliegenden Bearbeitungsstationen vorgenommen. Es liegt also in Durchlaufrichtung hinter der Bündigfräsvorrichtung, die ein mit der Oberseite des Werkstücks bündig nachgeführtes Fräswerkzeug aufweist, eine zweite Bündigfräsvorrichtung, die ein mit der Unterseite des Werkstücks bündig nachgeführtes Fräswerkzeug hat. Diese Anordnung erlaubt zwar eine hohe Durchlaufgeschwindigkeit der Werkstücke, sie bedingt aber eine erhebliche Baulänge der Maschine und eine Werkstückaufgabe sowie Werkstückausgabe an den einander gegenüberliegenden Enden der Maschine, da die Werkstücke auf der Transportvorrichtung nur im Vorlauf befördert werden. An der Aufgabeseite sowie an der Ausgabestelle für die Werkstücke müssen entweder zusätzlich Bedienungsplätze oder automatisch arbeitende Handhabungsvorrichtungen vorgesehen werden, womit Maschinen dieser Art einen erheblichen Platz- und Bedienungsaufwand haben.

Bei vielen Einsatzfällen solcher Maschinen ist es aus Platz- oder Organisationsgründen wünschenswert, die Werkstücke an ein und derselben Stelle aufgeben und wieder entnehmen zu können. Dazu ist es aus dem deutschen Gebrauchsmuster 86 20 374 bekannt, parallel zur Transportvorrichtung eine Rückführeinrichtung für die Werkstücke vorzusehen. Die Werkstücke müssen deshalb am Ende der Durchlaufstrecke von der Transportvorrichtung auf die Rückführeinrichtung übergeben werden, wofür besondere Übergabevorrichtungen vorgesehen werden müssen. Die Rückführeinrichtung ist ein zusätzliches Maschinenbauteil und beansprucht erheblichen Platz, wenn die Werkstücke flach liegend zurücktransportiert werden sollen.

Die FR-A-2 376 729 beschreibt zwar eine ähnliche Holzfräsmaschine, mit der gerundete Zapfen an einer Schmalfläche von plattenförmigen Werkstücken hergestellt werden können, wobei die Werkstücke auf einer Transportvorrichtung an einem ortsfesten Werkzeug vorbeigeführt werden, das um die gerundeten Zapfen herumgeführt werden kann und entsprechend höhenverstellbar ist. Auf eine kurzbauende Maschine, die lediglich von einer Stelle aus bedient werden kann, kommt es hierbei jedoch nicht an, denn diese bekannte Maschine hat an gegenüberliegenden Enden zwei Rüstplätze, von wo aus je eine Transportvorrichtung zur Bearbeitungsstation hinführt, so daß man von dort Hinweise für eine kompakt bauende Maschine zum Anbringen und Bündigfräsen von Kantenstreifen an plattenförmigen Werkstücken nicht entnehmen kann.

Der Erfindung liegt die Aufgabe zugrunde, eine Maschine der gattungsbildenden Art zu schaffen, die von einer Stelle aus bedient werden kann, kurz baut und für die Rückführung der Werkstücke keine zusätzliche Baubreite sowie keine separate Fördereinrichtung benötigt.

Diese Aufgabe wird bei einer Maschine der gattungsgemäßen Art nach der Erfindung dadurch gelöst, daß am Ende des Durchlaufs des Werkstücks an der Bündigfräsvorrichtung das Fräswerkzeug abgesenkt, die Förderrichtung der Transportvorrichtung umgekeht und beim Rücklauf das Fräswerkzeug bündig mit der Unterseite des Werkstücks nachgeführt wird, wozu die Bündigfräsvorrichtung einen Support aufweist, an dem das Fräswerkzeug mit seinem Drehantrieb angeordnet und der zumindest senkrecht zur Werkstückebene verfahrbar ist, und daß der Support der Bündigfräsvorrichtung in der Durchlaufrichtung entlang einer begrenzten Wegstrecke vor- und zurückfahrbar ist.

Die Vorteile einer erfindungsgemäßen Maschine liegen darin, daß die Transportvorrichtung für den Vorlauf und die Rückführung der Werkstücke genutzt wird, womit eine separate Fördereinrichtung für die Rückführung der Werkstücke entfällt. Weiter wird mit dem Fräswerkzeug die Kantennachbearbeitung sowohl an der Stirnkante zur Oberseite hin als auch an der Stirnkante zur Unterseite hin sowie an den um die Schmalseiten herumführenden Kanten vorgenommen, wozu das Fräswerkzeug nach Umkehr der Transportrichtung des Werkstücks seine Position ändert. In bevorzugter Ausführung wird die Kantennachbearbeitung mittels eines Universalfräsaggregates vorgenommen, welches das Bündigkappen an der Vorder- und Hinterkante des Werkstücks bezogen auf die Durchlaufrichtung, das Vor- und Feinfräsen an der Ober- und Unterkante und auch das Kopierfräsen für Formbereiche der Werkstücke, wie Kantenrundungen, übernimmt. Die erfindungsgemäße Maschine ist sehr kompakt und kann, da sich jeweils nur ein einziges Werkstück auf der Transportvorrichtung in Bearbeitung befindet, für jeden zu befräsenden Bereich entlang der Bearbeitungskanten auf eine optimale Schnittgeschwindigkeit eingestellt werden. Das Fräswerkzeug ist an einem Support der Bündigfräsvorrichtung angeordnet, der zumindest senkrecht zur Werkstückebene verfahrbar ist. So kann beim Nachfahren von gerundeten, in Durchlaufrichtung vorn und/oder hinten liegenden Werkstückschmalseiten der Vorschub des Werkstücks durch die Transportvorrichtung und die Zustellung des Fräswerkzeugs mittels des Supports überlagert werden. Zudemist der Support der Bündigfräsvorrichtung in der Durchlaufrichtung entlang einer begrenzten Wegstrecke vor- und zurückfahrbar. Zum einen kann er dadurch beim Nachfahren der gerundeten, in

Durchlaufrichtung vorn und/oder hinten liegenden Werkstückschmalseiten in der Durchlaufrichtung mit dem Werkstück mitgeführt werden. Zum anderen kann er beim Nachfahren dieser gerundeten Werkstückschmalseiten mit dem Fräswerkzeug die Kantenkontur abfahren, wobei der Support in Richtung seiner beiden Bewegungsachsen zugestellt wird, wobei dann die Transportvorrichtung beim Auflaufen des Werkstücks auf die Bündigfräsvorrichtung und/oder beim Auslaufen aus der Bündigfräsvorrichtung angehalten wird. In jedem Fall kann die Schnittgeschindigkeit entlang der Bearbeitungsbahn für jeden Bereich optimiert und vor allem im Bereich nachzufahrender Rundungen verringert werden.

Schließlich liegt eine vorteilhafte Ausgestaltung der Erfindung darin, am Support der Bündigfräsvorrichtung in Durchlaufrichtung hintereinander zwei Fräswerkzeuge anzuordnen. Dabei haben die beiden Fräswerkzeuge einen Höhenversatz zueinander bezogen auf die Werkstückebene, wobei das beim Vorlauf des Werkstücks an der Anlaufseite der Bündigfräsvorrichtung angeordnete, erste Fräswerkzeug zwecks Vorfräsen um den Versatz weiter von der Werkstückebene weg gegenüber dem beim Werkstückvorlauf an der Auslaufseite der Bündigfräsvorrichtung befindlichen zweiten Fräswerkzeug angeordnet ist. Beim Vorlauf des Werkstücks wird dieses zweite, in der Vorlaufrichtung hintere Fräswerkzeug bündig mit der Oberseite des Werkstücks nachgeführt. Beim Rücklauf des Werkstücks hingegen wird das zweite, in Rücklaufrichtung nunmehr vordere Fräswerkzeug zum Vorfräsen genutzt, denn es hat nach unten hin einen Abstand von der Werkstückunterseite entsprechend dem Versatz, und es wird das hintere, erste Fräswerkzeug bündig mit der Unterseite des Werkstücks nachgeführt, was voraussetzt, daß beide Fräswerkzeuge mit der Umkehr der Förderrichtung der Transportvorrichtung vom Vorlauf zum Rücklauf zusätzlich um die Höhe des Versatzes abgesenkt werden.

Die Erfindung wird nachfolgend anhand der Zeichnung an einem Ausführungsbeispiel noch näher erläutert. Dabei zeigen:
- Fig. 1: eine schematische Draufsicht auf eine Maschine zum Anbringen und Bündigfräsen von Kantenstreifen,
- Fig. 2: eine schematische perspektivische Stirnansicht eines auf der Maschine nach Fig. 1 zu bearbeitenden Werkstücks nach dem Anbringen eines Kantenstreifenabschnitts und vor dem Bündigfräsen,
- Fig. 3: eine erste Seitansicht der Maschine nach Fig. 1 bei vorgelaufenem Werkstück,
- Fig. 4: eine vergrößerte Stirnansicht der Fräswerkzeuge, des Werkstücks sowie eines Teils der Transportvorrichtung der Maschine nach Fig. 3 beim Werkstückvorlauf,
- Fig. 5: eine weitere Seitansicht der Maschine nach Fig. 1 beim Rücklauf des Werkstücks und
- Fig. 6: eine vergrößerte schematische Ansicht der Fräswerkzeuge, des Werkstücks und eines Abschnitts der Transportvorrichtung beim beginnendem Werkstückrücklauf.

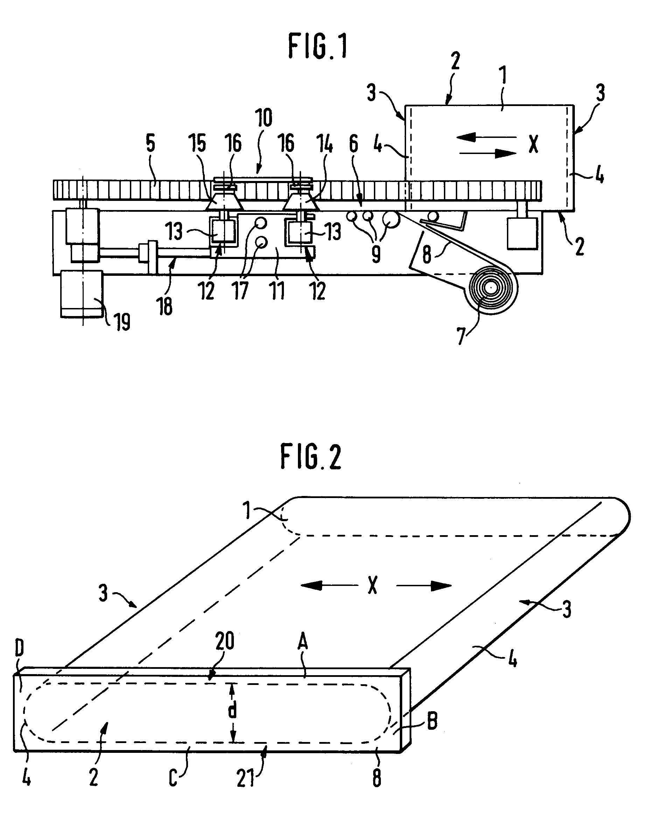

Im einzelnen erkennt man in den Fig. 1 und 2 ein plattenförmiges Werkstück 1 von rechteckiger Grundform, welches an seinen beiden gegenüberliegenden Schmalflächen 2 mit einem Kantenstreifen 8 kaschiert werden soll. An den beiden weiteren Schmalseiten 3 weist das Werkstück 1 etwa kreisbogenförmig gerundete Kanten 4 auf, in deren Bereich ebenso wie an der Oberseite 20 und an der Unterseite 21 des Werkstücks 1 die Überstände A, B, C und D des Kantenstreifens 8 durch Bündigfräsen beseitigt werden müssen.

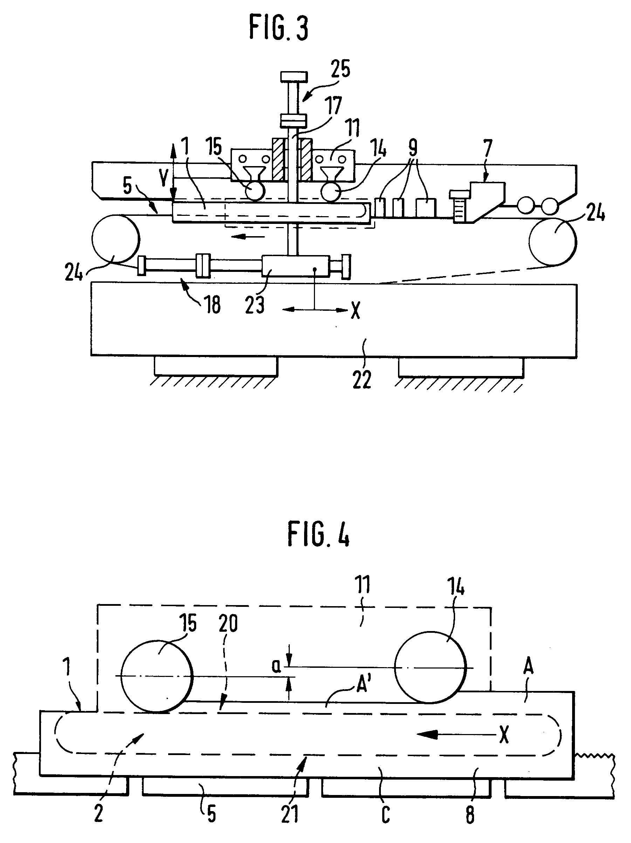

Wie sich insbesondere aus den Figuren 1 und 3 ergibt, hat die im Durchlauf arbeitende Maschine eine Transportvorrichtung 5 in Gestalt einer endlosen, umlaufenden Kette, die über Umlenkräder 24 geführt ist. Eines dieser Umlenkräder 24 wird über einen Motor 19 angetrieben, wobei entweder durch Drehrichtungsumkehr des Motors 19 oder über ein zwischengeschaltetes Getriebe die Transportvorrichtung 5 auf Vorlauf oder Rücklauf geschaltet werden kann. Außerdem kann auch die Fördergeschwindigkeit der Transportvorrichtung 5 variierbar sein. Die Transportvorrichtung 5 hat in der Zeichnung nicht näher dargestellte Spannglieder, über die das Werkstück 1 fest mit der Transportvorrichtung 5 verbunden werden kann. Zur Unterstützung größerer Werkstücke 1 kann eine zweite Transportkette parallel zur Transportvorrichtung 5 vorgesehen werden, die in der Zeichnung nicht wiedergegeben ist.

Die Förder- oder Durchlaufrichtung der Transportvorrichtung 5 ist in der Zeichnung durch die Pfeile X gekennzeichnet, wobei in dieser Richtung sowohl ein Vorlauf als auch ein Rücklauf der Werkstücke 1 möglich ist. Die Werkstücke 1 werden auf der Transportrichtung 5 mit ihrer Plattenebene horizontal festgespannt, wobei sie mit ihrer zu bearbeitenden Schmalseite 2 seitlich über die Transportvorrichtung 5 vorstehen.

Das in Fig. 1 rechts erkennbare Werkstück 1 befindet sich an der Aufgabe- bzw. Entnahmestelle der Maschine, es wird also von dort im Vorlauf bis zu einer bestimmten X-Position befördert, danach wird die Förderrichtung der Transportvorrichtung 5 umgekehrt, damit das Werkstück wieder seine Ausgangsposition in der X-Richtung nach abgeschlossener Bearbeitung einnimmt. Es kann deshalb die Maschine von ein und derselben Stelle aus bedient werden. Von der Ausgangsposition aus befördert die Transportvorrichtung 5 das Werkstück 1 entlang einer Kantenanleimvorrichtung 6 und einer Bündigfräsvorrichtung 10, die beide in der Durchlaufrichtung X hintereinander seitlich so neben der Transportvorrichtung 5 angeordnet sind, um die darüber überstehende Schmalfläche 2 des Werkstücks 1 bearbeiten zu können.

Zunächst wird beim Vorlauf des Werkstücks 1 an die zu bearbeitende Schmalfläche 2 ein von einem Vorrat 7 abgezogener Kantenstreifen 8 angegeben, der mit einer Klebschicht versehen ist und mittels Andruckrollen 9, an denen das Werkstück 1 vorbeiläuft, fest an die Schmalfläche 2 des Werkstücks 1 angedrückt wird. Der Kantenstreifen 8 wird derart angefahren und abgekappt, daß er über die vordere und die hintere Schmalseite 4 des Werkstücks 1 übersteht. Des weiteren ist der Kantenstreifen 8 breiter als das plattenförmige Werkstück 1 dick ist, wodurch sich ein Überstand des Kantenstreifens 8 nach oben über die Oberseite 20 und nach unten über die Unterseite 21 des Werkstücks 1 ergibt, was im einzelnen aus Fig. 2 hervorgeht.

Nach dem Passieren der Kantenanleimvorrichtung 6 läuft das Werkstück 1 die Bündigfräsvorrichtung 10 an. Sie hat die Aufgabe, die Überstände A bis D des Kantenstreifens 8 (Fig. 2) entsprechend den Umrißkonturen des Werkstücks 1 an seiner stirnseitigen Schmalfläche 2 bündig abzutragen. Folglich muß im Vor- und im Rücklauf des Werkstücks 1 die länglich ovale Kante zwischen der stirnseitigen Schmalfläche 2 und der Oberseite 20, der Unterseite 21 sowie den mit den gerundeten Kanten 4 versehenen Stirnseiten 3 des Werkstücks 1 lückenlos abgefahren werden.

Die Bündigfräsvorrichtung 10 weist einen Support 11 auf, an dem zwei Universalfräsaggregate 12 angeordnet sind. Jedes dieser Aggregate 12 hat einen Antriebsmotor 13 mit einer Abtriebswelle, auf der bei dem ersten Universalfräsaggregat 12 ein erstes Fräswerkzeug 14 und bei dem zweiten Universalfräsaggregat 12 ein zweites Fräswerkzeug 15 sitzt. Die Rotationsachsen beider Fräswerkzeuge 14 und 15 liegen parallel zur horizontalen Werkstückebene und sind senkrecht auf die Durchlaufrichtung X ausgerichtet. An den Fräsaggregaten 12 finden sich noch Tastvorrichtungen 16, um die Fräswerkzeuge 14 und 15 äquidistant bzw. exakt der umlaufenden Kante der Schmalfläche 2 des Werkstücks 1 nachführen zu können.

Der Support 11 ist an Führungen 17 gelagert, die vertikal zur horizontalen Werkstückebene stehen, womit der Support 11 in Höhenrichtung bewegt werden kann. Die Vertikalführung des Supports 11 ist auf einem oder mehreren horizontal geführten Führungsgliedern 23 angeordnet, die auf dem Maschinenbett 22 in der Durchlaufrichtung X über eine begrenzte Wegstrecke bewegbar sind. Dazu sind die Führungsglieder 13 mit einer entsprechenden Antriebseinheit 18 gekuppelt. Zur Ausführung der Vertikalverschiebung ist oberhalb der Führungen 17 eine entsprechende Antriebseinheit 25 vorhanden.

Die beiden Fräswerkzeuge 14 und 15 der Bündigfräsvorrichtung 10 sind nicht höhengleich angeordnet, vielmehr ist das Fräswerkzeug 14 um einen Versatz a gegenüber dem Fräswerkzeug 15 nach oben hin versetzt. Von den beiden in der Durchlaufrichtung X hintereinanderliegenden Fräswerkzeugen ist das erste, in der Zeichnung jeweils rechts dargestellte Fräswerkzeug 14 dasjenige, das beim Vorlauf des Werkstücks 1 als erstes angelaufen wird. Aufgrund seines Höhenversatzes tragt es den oberen Überstand A des Kantenstreifens 8 nur zum Teil ab, so daß ein Restüberstand A' verbleibt, womit beim Vorlauf des Werkstücks 1 das Fräswerkzeug 14 zum Vorfräsen dient. Das in der Vorlaufrichtung dahinter angeordnete, zweite Fräswerkzeug 15 hingegen wird bündig mit der Oberkante zwischen der Schmalfläche 2 und der Oberseite 20 des Werkstücks 1 mitgeführt. Folglich wird mit dem zweiten Fräswerkzeug 15 der Feinfräsvorgang durchgeführt, mit dem der Restüberstand A' des Kantenstreifens 8 an der Oberseite 20 des Werkstücks 1 restlos beseitigt wird.

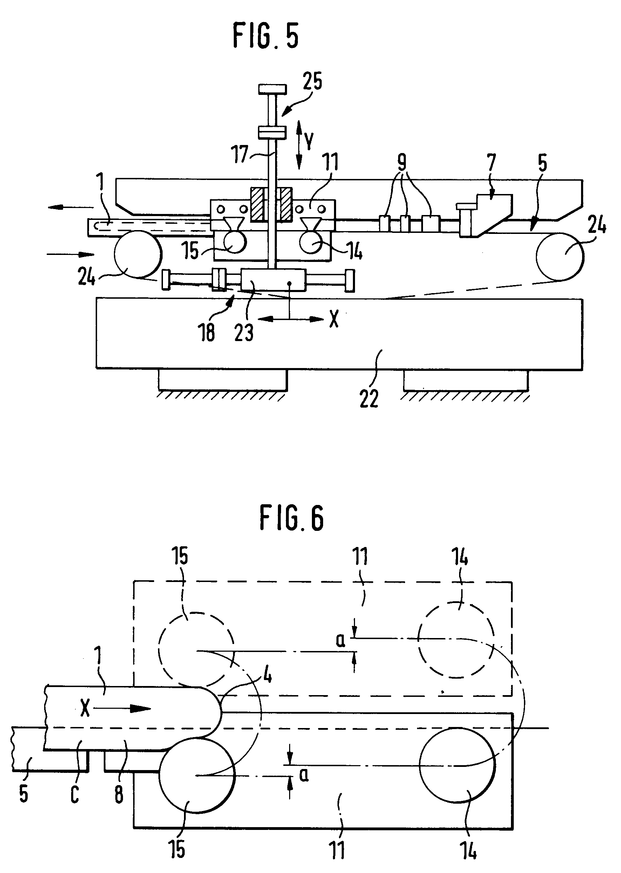

Nachdem das Werkstück 1 unter der Bündigfräsvorrichtung 10 restlos hindurchgelaufen ist wird die Förderrichtung der Transportvorrichtung 5 umgekehrt, und das Werkstück 1 läuft zu seiner Ausgangsposition in der Durchlaufrichtung X zurück. Dabei wird dann der Überstand C des Kantenstreifens 8 an der Unterseite 21 des Werkstücks 1 abgetragen, wozu der Support 11 soweit abgesenkt wird, daß analog der Bearbeitung des Kantenstreifens 8 an der Werkstückoberseite nunmehr die Fräswerkzeuge 14 und 15 entlang der Werkstückunterseite verfahren werden. Dies wird im einzelnen aus den Figuren 5 und 6 deutlich. Dabei vertauschen das erste Fräswerkzeug 14 und das zweite Fräswerkzeug 15 ihre Aufgaben, folglich dient beim Rücklauf des Werkstücks 1 das tieferliegende, zuerst angefahrene zweite Fräswerkzeug 15 zum Vorfräsen, während das danach angefahrene, erste Fräswerkzeug 14 die Feinfräsung übernimmt und entsprechend entlang der Werkstückkante mitgeführt wird.

Die Bearbeitung des überstehenden Kantenstreifens 8 einerseits an der Oberseite 20 und andererseits an der Unterseite 21 des Werkstücks 1 erfordert nach dem Vorlauf des Werkstücks 1 ein Verstellen des Supports, um die beiden Fräswerkzeuge 14 und 15 um den Wirkdurchmesser ihrer Schneidenflugbahn zuzüglich des Versatzes a abzusenken. Problematischer ist das Nachfahren der gerundeten Kanten 4 des Werkstücks 1 weil hierbei die Vertikalbewegung des Supports 11 in Y-Richtung mit einer Relativbewegung zwischen dem Werkstück 1 und dem Support 11 bzw. seinen Fräswerkzeugen 14 und 15 in der Durchlaufrichtung X überlagert werden muß. Hierzu kann man die Zustellbewegung des Supports 11 in Y-Richtung in Abhängigkeit von der Bewegung des Werkstücks 1 über die Transportvorrichtung 5 in X-Richtung steuern, um mit dem jeweils in Eingriff befindlichen Fräswerkzeug 14, 15 eine entsprechende Kurvenbahn abfahren zu können.

Bei komplizierteren Kantenrundungen, beispielsweise mit abwechselnden konkaven und konvexen Bögen, kann die Relativbewegung zwischem dem Werkstück 1 und den Fräswerkzeugen 14, 15 allein aufgrund der Fördergeschwindigkeit der Transportvorrichtung 5 für optimale Schnittbedingungen der Fräswerkzeuge 14, 15 ungeeignet sein, weswegen man dann mit einem Verfahren des Supportes 11 in der X-Richtung arbeitet, wobei zwei Versionen möglich sind: Zum einen kann das Werkstück 1 beim Einlauf und/oder Auslauf aus dem Bearbeitungsbereich der Bündigfräsvorrichtung 10 angehalten werden, um durch Verfahren des Supports 11 in X- und Y-Richtung die Kantenrundung abzufahren. Zum zweiten kann, um Bearbeitungszeit einzusparen, beim Abfahren der gerundeten Kanten der Support 11 in der Durchlaufrichtung X mit dem Werkstück 1 über eine Teilstrecke mitgeführt werden, wobei trotz Bewegung des Werkstücks in der Durchlaufrichtung X die Relativbewegung zwischen dem Support 11 und dem Werkstück 1 die gleiche wie bei angehaltenem Werkstück 1 sein kann. Entscheidend ist, daß in der Relation zwischen dem Werkstück 1 und dem Support 11 die Fräswerkzeuge 14, 15 den zur Kantenrundung des Werkstücks äquidistanten Bogen abfahren, der in Fig. 6 dargestellt ist. Dabei kann die resultierende Bahngeschwindigkeit der Fräswerkzeuge 14, 15 an die jeweiligen Schnittbedingungen in jedem Bahnpunkt optimal angepaßt werden, wobei insbesondere eine Verringerung des Schnittvorschubs in den gerundeten Bahnbereichen in Betracht kommt.

## Patentansprüche

1. Maschine zum Anbringen und Bündigfräsen von Kantenstreifen an den Schmalflächen (2) plattenförmiger Werkstücke (1) im Durchlauf mit einer Transportvorrichtung (5), auf der die Werkstücke (1) mit der betreffenden Schmalseite (2) quer zur Durchlaufrichtung (X) überstehend festspannbar sind, und mit in Durchlaufrichtung (X) hintereinander seitlich an der Transportvorrichtung (5) angeordneter Kantenanleimvorrichtung (6) und Bündigfräsvorrichtung (10), die zumindest ein mit seiner Rotationsachse quer zur Durchlaufrichtung (X) sowie parallel zur Plattenebene der Werkstücke und zumindest mit der Oberseite (20) des Werkstücks (1) bündig nachgeführtes Fräswerkzeug (14, 15) hat,
dadurch gekennzeichnet,
daß am Ende des Durchlaufs des Werkstücks (1) an der Bündigfräsvorrichtung (10) das Fräswerkzeug (14, 15) abgesenkt, die Förderrichtung der Transportvorrichtung (5) umgekehrt und beim Rücklauf das Fräswerkzeug (14, 15) bündig mit der Unterseite (21) des Werkstücks (1) nachgeführt wird, wozu die Bündigfräsvorrichtung (10) einen Support (11) aufweist, an dem das Fräswerkzeug (14, 15) mit seinem Drehantrieb (13) angeordnet und der zumindest senkrecht zur Werkstückebene verfahrbar ist, und daß der Support (11) der Bündigfräsvorrichtung (10) in der Durchlaufrichtung (X) entlang einer begrenzten Wegstrecke vor- und zurückfahrbar ist.

2. Maschine nach Anspruch 2,
dadurch gekennzeichnet, daß beim Nachfahren von gerundeten, in Durchlaufrichtung (X) vorn und/oder hinten liegenden Werkstückschmalseiten (3) der Vorschub des Werkstücks (1) durch die Transportvorrichtung (5) und die Zustellung des Fräswerkzeugs (14, 15) mittels des Supports (11) überlagert werden.

3. Maschine nach Anspruch 1,
dadurch gekennzeichnet, daß beim Nachfahren der gerundeten, in Durchlaufrichtung vorn und/oder hinten liegenden Werkstückschmalseiten (3) der Support (11) in der Durchlaufrichtung (X) mit dem Werkstück (1) mitgeführt wird.

4. Maschine nach einem der Ansprüche 2 oder 3,
dadurch gekennzeichnet,
daß beim Nachfahren der gerundeten, in Durchlaufrichtung (X) vorn und/oder hinten liegenden Werkstückschmalseiten (3) die Fördergeschwindigkeit der Transportvorrichtung (5) gegenüber der beim Nachfahren gerader Strecken vermindert wird.

5. Maschine nach Anspruch 1,
dadurch gekennzeichnet,
daß beim Nachfahren der gerundeten, in Durchlaufrich tung (X) vorn und/oder hinten liegenden Werkstückschmalseiten (3) die Transportvorrichtung (5) beim Auflaufen des Werkstücks (1) auf die Bündigfräsvorrichtung (10) und/oder beim Auslaufen aus der Bündigfräsvorrichtung (10) angehalten und der Rundungsbereich durch Verfahren des Supports (11) mit dem Fräswerkzeug (14, 15) abgefahren wird.

6. Maschine nach einem der Ansprüche 1 - 5,
dadurch gekennzeichnet,
daß am Support (11) der Bündigfräsvorrichtung (10) in Durchlaufrichtung hintereinander zwei Fräswerkzeuge (14 und 15) angeordnet sind, von denen das beim Vorlauf des Werkstücks (1) an der Anlaufseite der Bündigfräsvorrichtung (10) angeordnete, erste Fräswerkzeug (14) zwecks Vorfräsen um einen Versatz (a) von der Werkstückebene weg gegenüber dem an der Auslaufseite der Bündigfräsvorrichtung befindlichen, zweiten Fräswerkzeug (15) angeordnet ist, wobei beim Vorlauf des Werkstücks (1) das zweite Fräswerkzeug (15) bündig mit der Oberseite (20) des Werkstücks (1) nachgeführt wird und beim Rücklauf des Werkstücks (1), bei dem das zweite Fräswerkzeug (15) zwecks Vorfräsen als erstes angelaufen wird, beide Fräswerkzeuge (14 und 15) zusätzlich um die Höhe des Versatzes (a) abgesenkt sind und das erste Fräswerkzeug (14) bündig mit der Unterseite (21) des Werkstücks (1) nachgeführt wird.

## Claims

1. A machine for applying and flush milling of edging strips to narrow faces (2) of board-formed workpieces (1) in a pass using a transporting device (5) on which the workpieces (1) can be securely clamped with the narrow side (2) concerned projecting transversely to the direction of pass (X), and an edge gluing device (6) and flush milling device (10) arranged laterally one behind the other on the transporting device (5) in the direction of pass (X), which has at least one milling cutter having its axis of rotation transverse to the direction of pass (X) and parallel to the plane of board of the workpiece (1) and has at least a milling cutter (14, 15) guided flush with the top side (20) of the workpiece (1),
characterised in that,
the milling cutter (14, 15) is lowered at the end of the pass of the workpiece (1) on the flush milling device (10), the direction of conveyance of the transporting device (5) reversed and that during the return motion the milling cutter (14, 15) is guided flush with the underside (21) of the workpiece (1), for which the flush milling device (10) features a support (11) to which the milling cutter (14, 15) is arranged with its rotational drive and which can be moved at least vertically to the plane of the workpiece, and that the support (11) of the flush milling device (10) can be moved backwards and forwards along a confined path in the direction of pass (X).

2. A machine according to claim 2,
characterised in that during copying of rounded narrow sides (3) of the workpiece lying at the front and/or rear in the direction of pass (X) the feeding movement of the workpiece by the transporting device (5) and the adjusting movement of the milling cutter (14, 15) by means of the support (11) overlap.

3. A machine according to claim 1,
characterised in that during copying of rounded narrow sides (3) of the workpiece lying at the front and/or rear in the direction of pass the support (11) is carried along with the workpiece (1) in the direction of pass (X).

4. A machine according to one of the claims 2 or 3,
characterised in
that during copying of rounded narrow sides (3) of the workpiece lying at the front and/or rear in the direction of pass (X) the speed of conveyance of the transporting device (5) is reduced in relation to straight sections during copying.

5. A machine according to claim 1
characterised in
that during copying of rounded narrow sides (3) of the workpiece lying at the front and/or rear in the direction of pass (X) the transporting device (5) stops during the run-on of the workpiece (1) on to the flush milling device (10) and/or during run-off from the flush milling device (10) and the zone of rounding is traversed by movement of the support (11) with the milling cutter (14, 15).

6. A machine according to any of the claims 1 to 5,
characterised in
that two milling cutters (14, 15) are arranged one behind the other in the direction of pass on the support (11) of the flush milling device (10), of which the first milling cutter (14) arranged on the run-on side of the flush milling device (10) for the forward stroke of the workpiece (1) for the purpose of rough milling is arranged by an offset (a) further away from the plane of the workpiece in relation to the second milling cutter (15) situated on the run-off side of the flush milling device, whereby during the forward stroke of the workpiece (1) the second milling cutter (15) is guided flush with the top side (20) of the workpiece (1) and during the return stroke of the workpiece (1), in which the second milling cutter (15) for the purpose of rough milling now leads as the first one, both milling cutters (14 and 15) being additionally lowered by the height of the offset (a) and the first milling cutter (14) guided flush with the underside (21) of the workpiece (1).

## Revendications

1. Machine pour appliquer et fraiser à fleur des bandes de bordure sur les tranches (2) de pièces à usiner (1), en forme de plaques, en un cycle de travail avec un dispositif de transport (5), sur le-lequel les pièces à usiner (1) peuvent être fixées, la tranche (2) en question étant en saillie transversale dans le sens de passe (X), et avec un dispositif d'encollage (6) des bords, ainsi qu'un dispositif de fraisage à fleur (10), disposés l'un derrière l'autre, dans le sens de passe (X), latéralement par rapport au dispositif de transport (5), le dispositif de fraisage à fleur (10) comportant, au moins, un outil de fraisage (14, 15), dont l'axe de rotation est disposé transversalement par rapport au sens de passe (X) et parallèlement au plan de la pièce à usiner (1) et est guidé en affleurant au moins au côté supérieur (20) de la pièce à usiner (1),
caractérisée en ce que
l'outil de fraisage (14, 15) du dispositif de fraisage à fleur (10) est abaissé à la fin du passage de la pièce à usiner (1), le sens de marche du dispositif de transport (5) est renversé et, au retour, l'outil de fraisage (14, 15) est conduit à fleur du bord inférieur (21) de la pièce à usiner (1), le dispositif de fraisage à fleur (10) étant équipé, dans ce but, d'un support (11), sur lequel l'outil de fraisage (14, 15) est installé avec son entraînement de rotation (13), le support (11) du dispositif de fraisage à fleur (10) étant déplaçable au moins perpendiculairement au plan de la pièce à usiner et déplaçable en avant et en arrière, dans le sens (X), sur un parcours limité.

2. Machine selon la revendication 2,
caractérisée en ce que,
en suivant les tranches (3) arrondies, situées en avant et/ou en arrière dans le sens de passe (x), le dispositif de transport (5) est superposé à l'avance de la pièce à usiner (1) et le support (11) est superposé à l'avance de l'outil de fraisage (14, 15).

3. Machine selon la revendication 1,
caractérisée en ce que
le support (11) est conduit, dans le sens de passe (X) avec la pièce à usiner (1), lors du suivi des tranches (3) arrondies, situées en avant et/ou en arrière dans le sens de passe.

4. Machine selon la revendication 2 ou 3,
caractérisée en ce que,
lors du suivi des tranches arrondies (3), situées en avant et/ou en arrière dans le sens de passe, la vitesse du dispositif de transport (5) est réduite par rapport à celle du fraisage des parcours rectilignes.

5. Machine selon la revendication 1,
caractérisée en ce que
le dispositif de transport (5) est arrêté lorsque la pièce à usiner (1) entre en contact avec le dispositif de fraisage à fleur (10) et/ou s'en éloigne et que la zone arrondie est suivie par déplacement du support (11) avec l'outil de fraisage (14, 15), lors du fraisage des tranches arrondies (3), situées en avant et/ou en arrière dans le sens de passe (X).

6. Machine selon l'une des revendications 1 à 5,
caractérisée en ce que
le support (11) du dispositif de fraisage à fleur (10) est équipé de deux outils de fraisage (14, 15), disposés l'un derrière l'autre, dans le sens de passe, le premier outil de fraisage (14), situé, lors de l'avance de la pièce à usiner (1), sur le côté d'entrée en contact du dispositif de fraisage à fleur (10), étant décalé, aux fins de préfraisage, d'un déport (a) du plan de la pièce à usiner, par rapport au deuxième outil de fraisage (15) se trouvant du côté sortie du dispositif de fraisage à fleur, et que, lors de l'avance de la pièce à usiner (1), le deuxième outil de fraisage (15) est conduit à fleur de la face supérieure (20) de la pièce à usiner, les deux outils de fraisage (14 et 15) étant abaissés sur la hauteur du déport (a) lors du retour de la pièce à usiner (1), avec laquelle le deuxième outil de fraisage (15) entre en contact le premier aux fins de préfraisage, et le premier outil de fraisage (14) étant conduit à fleur de la face inférieure (21) de la pièce à usiner (1).
